(19) Europäisches Patentamt

European Patent Office

Office européen des brevets

(11) **EP 1 424 310 A2**

(12) **EUROPEAN PATENT APPLICATION**

(43) Date of publication:
02.06.2004 Bulletin 2004/23

(51) Int Cl.$^7$: **C01B 6/21**

(21) Application number: **03027149.8**

(22) Date of filing: **26.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **27.11.2002 JP 2002344426
17.03.2003 JP 2003072466**

(71) Applicant: **Materials & Energy Research Institute
Tokyo, Ltd.
Chino-shi, Nagano-ken 391-0301 (JP)**

(72) Inventors:
• **Suda, Seijirau
Fujisawa-shi Kanagawa-ken 251-0044 (JP)**

• **Li, Zhoupeng
Hachioji-shi Tokyo 192-0015 (JP)**
• **Iwase, Yasuyoshi
Hachioji-shi Tokyo 192-0015 (JP)**
• **Morigasaki, Nobuto
Hachioji-shi Tokyo 192-0015 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Method for producing tetrahydroborates**

(57) Powdery mixture containing borate and alkali earth metal, for example, magnesium is prepared. Hydrogen atmosphere is fed to the mixture, for example, from hydrogen gas source. The mixture is reacted in hydrogen atmosphere under pressure below reaction equilibrium pressure where hydride of magnesium can exist in stable.

**EP 1 424 310 A2**

**Description**

BACKGROUND OF THE INVENTION

The present invention relates to a method for producing tetrahydroborates by hydrogenating borate, for example, borate of alkali metal.

Tetrahydroborate, for example, sodium borohydride ($NaBH_4$) has been widely used as reducing agent or hydrogenating agent, and is recently considered to be adapted also for hydrogen generating agent or fuel for fuel cells.

It has been so far known as conventional method for producing tetrahydroborates by using borate as chemical raw material to heat a mixture of borate, for example, formed in briquette and alkali metal or alkali earth metal at fixed temperature under hydrogen pressure. Here, hydride of alkali metal or alkali earth metal is preliminarily formed as precursor for reaction, borate is hydrogenated in course of reaction with the precursor, and thereby tetrahydroborate is produced (for example, refer to the Patent Document 1). To describe this reaction in more detail, for example, if sodium metaborate ($NaBO_2$) is adapted for borate as chemical raw material and magnesium (Mg) is adapted for alkali metal or alkali earth metal, reaction of magnesium with hydrogen precedes to produce magnesium hydride ($2MgH_2$) as represented in the reaction formula (1). When the reaction then progresses and magnesium particles are covered with magnesium hydride layer of a certain thickness, the reaction of the reaction formula (1) substantially comes not to progress as hydrogen cannot pass through the magnesium hydride layer. Then the reaction of this magnesium hydride with sodium metaborate follows and sodium borohydride, which is tetrahydroborate, is produced as represented in the reaction formula (2).

$$2Mg + 2H_2 \rightarrow 2MgH_2 \tag{1}$$

$$2MgH_2 + NaBO_2 \rightarrow 2MgO + NaBH_4 \tag{2}$$

Patent Document 1 JP, B, 33-10788 (Pages 3 to 4)

However, the above method involves a problem that utilization rate of magnesium is low as, for example, 40% of magnesium is left unreacted in an interior of the magnesium hydride layer. Therefore, the reaction for producing magnesium hydride represented in the reaction formula (1) should be promoted to preliminarily produce magnesium hydride as much as possible or form magnesium hydride layer as thick as possible. Otherwise, magnesium hydride runs short for reaction with sodium metaborate, and this may result that yield of sodium borohydride becomes low. In order to enhance yield of the reaction formula (1), hydrogen should move or pass through the magnesium hydride layer and penetrate deep inside so that magnesium hydride is further produced. Therefore, high hydrogen pressure of 10 to 20Mpa is required, for example, as temperature is raised to 500 to 550°C by heating. However, high power is required for pressurizing at such high hydrogen pressure, then a pressurizer or reactor is large-sized, and consequently there is a fear that production cost is raised. Further, the above pressurizing and heating conditions should be maintained for a long time in order to hydrogenate magnesium deep inside. On the other hand, magnesium of an amount comparable to unreacted magnesium may be mixed in the chemical raw material preliminarily. However, as consumption of magnesium is increased, operation cost is also raised.

The present invention is made under such circumstances. Accordingly, it is an object of the present invention to provide a method to produce tetrahydroborates at low production cost. And, it is another object of the present invention to provide a method to produce tetrahydroborates with high yield under mild reaction conditions.

SUMMARY OF THE INVENTION

In order to achieve a foregoing object, there is provided a novel method for producing tetrahydroborates by using borate as chemical raw material. The method of the present invention, for example, may include a step of preparing mixture containing borate as chemical raw material and alkali earth metal, and comprises reacting the mixture by heating in a hydrogen atmosphere under pressure below reaction equilibrium pressure where hydride of the alkali earth metal exists in stable or is stabled to produce tetrahydroborates.

According to a method for producing tetrahydroborates of the present invention, protide ($H^-$) which is formed on a surface of alkali earth metal under a pressure below a reaction equilibrium pressure where hydride of alkali earth metal exists in stable or is stabled is utilized Therefore, even if a surface of alkali earth metal is covered with a film or layer such as oxide film or layer, reaction rate can be restrained from decreasing. Also there is no need to produce hydride of alkali earth metal as reaction precursor preliminarily. As a result, tetrahydroborate can be obtained with high yield. Here, as protides are formed sequentially on a surface of alkali earth metal such as magnesium in the course of reaction and less alkali earth metal is left unreacted, the alkali earth metal can be used at high utilization rate. Consequently, this offers low production cost.

Magnesium (Mg) may be used as alkali earth metal. The mixture may be composed to contain hydrogenation catalyst or hydrogenating catalyst, for example, metal catalyst to adsorb hydrogen. And, the mixture may be, for example, in form of powder or fine powder. In this case, borate and alkali earth metal may be pulverized with average particle diameter of maximum 100μm respectively. Also borate or borate powder and alkali earth metal or alkali earth metal powder may be pulverized generally the same in average particle diameter, or the average particle diameters of both the borate and the alkali earth metal may be generally the same. Further, coke oven gas may be used as a source of hydrogen. In the present invention, the mixture may be placed in a hydrogen atmosphere at temperature of maximum 450°C, and then heated to temperature of 500 to 650°C, or reacted at temperature raised to 500 to 650°C by heating. Tetrahydroborate to be produced may be or include any one of a group consisting of sodium borohydride (NaBH$_4$), lithium borohydride (LiBH$_4$) and potassium borohydride (KBH$_4$).

As stated above, according to the present invention, reaction conditions are fixed to include a pressure or a reaction pressure below reaction equilibrium pressure where hydride of alkali earth metal can exist in stable or be stabled. Therefore, tetrahydroborate can be produced by using protide formed on a surface of alkali earth metal. Then, without producing reaction precursor preliminarily, tetrahydroborate can be obtained with high yield. And, as oxide layer or film is formed as if oxide ions of borate penetrate into alkali earth metal, it can decrease alkali earth metal left unreacted. Consequently, production cost of tetrahydroborate can be lowered.

BRIEF DESCRIPTION OF THE DRAWINGS

Fig. 1 is a diagram showing equilibrium pressure lines when magnesium reacts with hydrogen to produce magnesium hydride.

Fig. 2 is a diagram showing characteristics in EXAMPLES 1 and 2 given to confirm effects of the present invention.

Fig. 3 is a diagram showing characteristics in EXAMPLES 3 and 4 given to confirm effects of the present invention.

DETAILED DESCRIPTIONS OF PREFERRED EMBODIMENTS

The present invention will be explained with reference to preferred embodiments. First, for example, metaborate, tetraborate or pentaborate may be used for borate as chemical raw material. Specifically, for example, NaBO$_2$, KBO$_2$, LiBO$_2$, Ca(BO$_2$)$_2$ or Mg(BO$_2$)$_2$ may be used for metaborate, for example, Na$_2$B$_4$O$_7$, Na$_2$O·2BO$_3$, K$_2$O·B$_2$O$_3$, Li$_2$B$_4$O$_7$ or Mg$_3$B$_4$O$_9$ may be used for tetraborate, and, for example, NaB$_5$O$_8$, Na$_2$O·5B$_2$O$_3$, KB$_5$O$_8$, K$_2$O·5B$_2$O$_9$ or LiB$_5$O$_8$ may be used for pentaborate. Or, natural borate minerals, for example, such as Na$_2$B$_4$O$_7$•10H$_2$O, Na$_2$B$_4$O$_7$•4H$_2$O, Ca$_2$B$_6$O$_{11}$•5H$_2$O, CaNaB$_5$O$_9$•6H$_2$O, and Mg$_7$Cl$_2$B$_{17}$O$_{30}$ may be used also for borate or chemical raw material. And, borate may be used preferably in form of powder or fine powder of average particle diameter, for example, of 500μm, preferably of maximum 100μm in order to improve reaction rate.

On the other hand, alkali earth metal to be mixed with borate as chemical raw material may be, for example, calcium (Ca), magnesium (Mg), strontium (Sr) or the like. Specifically, magnesium and calcium are preferred as they hardly chemically react in the air and, in addition, are pulverized easily. Purity does not matter with regard to these metals. For example, magnesium reclaimed from magnesium oxide (MgO) and magnesium containing impurities such as magnesium hydride (MgH$_2$) are also acceptable. The alkali earth metal is used preferably in form of powder or fine powder of average particle diameter, for example, of maximum 500μm, desirably of maximum 200μm to be mixed fully with fine power of the borate. This improves reaction rate. More preferably, the alkali earth metal is used in form of powder or fine powder of average particle diameter of maximum 100μm while the borate as chemical raw material is used in form of powder or fine powder also of average particle diameter maximum 100μm, and thereby reaction rate can be extremely improved. Specifically, borate and alkali earth metal are preferred in form of powder or fine powder generally the same in average particle diameter.

Then, reaction conditions in case that sodium metaborate is used as chemical raw material while magnesium is used as alkali earth metal is as follows. For one example, sodium metaborate and magnesium may be subject to reaction without any specific pretreatment. However, according to need, pretreatment process is performed. For example, sodium metaborate and magnesium are vacuum treated at temperature of 100 to 450°C while agitated and pulverized by means of ball-mill or the like in organic medium such as acetone. And thereby sodium metaborate and magnesium are dehydrate and dried by heat, so that the borate or sodium metaborate loses crystal water down to 1 or less, preferably converts into anhydride. Moisture is removed sufficiently from sodium metaborate and magnesium, they are fully mixed to a mixture and the mixture is filled in a reactor, for example, a reaction tube. Mixing ratio of magnesium to sodium metaborate is required to correspond to a theoretical mol ratio required for reaction or double of a theoretical mol ratio required for reaction. Magnesium is not required to be mixed or contained excessively.

Then, hydrogen gas is fed to the mixture in the reactor and the mixture is heated in a hydrogen gas atmosphere, for example, at temperature of 250 to 700°C. Due to the reason that sodium borohydride ($NaBH_4$) produced is thermally decomposed if reaction temperature is too high, reaction temperature is fixed preferably maximum 700°C, typically in the range of 400 to 650°C. More preferably, hydrogen gas is fed or introduced to the mixture in the reactor at temperature of maximum 450°C, for example, of 400°C, and the mixture is reacted at raised temperature of 500 to 650°C by heating or as temperature is raised to 500 to 650°C. Thereby high yield can be achieved at high reaction velocity. And, reaction pressure is fixed by feeding hydrogen gas or by pressure of hydrogen fed to suitable pressure below reaction equilibrium pressure where magnesium hydride which is produced, for example, by reaction represented in the reaction formula (1) recited in Background of Invention exists in stable or is stabled. In other words, reaction pressure is fixed to a pressure where magnesium hydride cannot exist in stable or cannot be stabled. Specifically, reaction pressure is fixed, for example, to maximum 1.9Mpa at 400°C, and, for example, to maximum 40Mpa at 600°C. In terms of reaction pressure, according to the method recited as prior art in Background of Invention, if reaction temperature is raised, hydrogen pressure should be also raised by that much accordingly or so as to correspond to raise in temperature. However, in this embodiment, even if reaction temperature is 500 to 600°C, a required hydrogen pressure is just low, for example, maximum 3MPa. It is advantageous as power or the like which is required for pressurizing can be decreased.

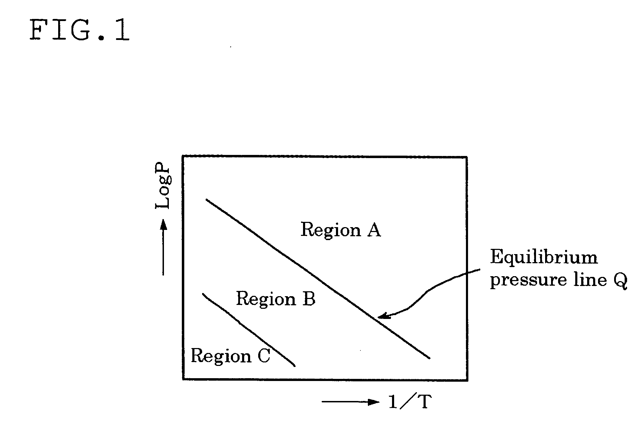

Here, the above-mentioned reaction equilibrium pressure where magnesium hydride exists in stable or is stabled is explained briefly. As shown in Fig. 1, there is considered to be generally a linear relationship between reaction equilibrium pressure P (log P) and temperature T (1/T). To cite an example, equilibrium pressure at 500°C is 11MPa, and that at 550°C is 21MPa. Hence, theoretically, if reaction conditions are fixed in a region A over an equilibrium pressure line Q, reaction of the reaction formula (1) is promoted to produce stable magnesium hydride, and if reaction conditions are fixed in a region B under the equilibrium pressure line Q, protide ($H^-$) or univalent anion of active hydride ion is formed only on a surface of magnesium by a reaction of a reaction formula (4). However, in fact, reaction is affected by various disturbances. For example, reaction is affected by impurities contained or temperature in a reactor varying according to heat release or radiation. Therefore, preferably tests are conducted preliminarily to grasp coordinate value or data points of actual equilibrium pressure line Q. On the other hand, in a region C, sodium borohydride produced is decomposed.

$$Mg + H_2 \Leftrightarrow Mg^{2+} \cdot 2H^- \text{ (surface)} \qquad (4)$$

Under the conditions according to this embodiment, first when magnesium comes into contact with hydrogen, stable magnesium hydride is not yet produced, but protide is produced on a surface of magnesium as represented in the reaction formula (4). And, ion-exchange reaction or exchange reaction of the protide with oxide ion ($O^{2-}$) in sodium metaborate in proximity to the protide follows, and thereby sodium metaborate is hydrogenated to produce sodium borohydride as represented in a reaction formula (5).

$$2[Mg^{2+} \cdot 2H^- \text{ (surface)}] + NaBO_2 \rightarrow NaBH_4 + 2MgO \qquad (5)$$

Meanwhile, when the above reactions represented in reaction formulas (4) and (5) progress, surfaces of magnesium powder or fine magnesium powder come to be covered with oxide film or layer of magnesium oxide. During that time, hydrogen gas (hydrogen molecules) enters inside through pores of the oxide layer under hydrogen pressure, and reacts with magnesium inside of the oxide layer to produce protide on a surface thereof. On the other hand, when sodium metaborate comes into contact with surface of magnesium powder (surface of the oxide layer), reactions are assumed to develop or progress as represented in reaction formulas (6a) to (6d). That is, due to difference in oxide ion concentration between sodium metaborate with two oxide ions and magnesium oxide with an oxide ion, the oxide ions in the sodium metaborate defuse and move in a direction toward the oxide layer, and push further inside the oxide ion which is already bonded with magnesium. Another oxide ion bonded with magnesium is pushed further inside by the first one and so on, like a billiard ball hitting another and pushing it. And thereby the oxide layer is accumulated or built up toward inside of magnesium fine powder. On the other hand, electrical unbalance is caused between sodium metaborate and fine magnesium powder as bivalent oxide anions diffuse and move in a side of magnesium, and thereby two protides move outwardly so as to exchange positions with the oxide ions resulting in electrically balanced state. And, the protide enters in pores left by escaping oxide ion of sodium metaborate and is bonded with sodium metaborate to produce sodium borohydride. This means, as reactions represented in reaction formulas (6a) to (6d) progress, oxide layer of magnesium is accumulated thick and deep inside. When oxide ions are pushed inside to the limit, the magnesium cannot contribute to reaction, as the magnesium is no more receptive to oxygen.

$$NaBO_2 + Mg_2 \Leftrightarrow [NaBO]^{2+} + MgO \qquad (6a)$$

$$[NaBO]^{2+} + 2H^- \rightarrow NaBOH_2 \qquad (6b)$$

$$NaBOH_2 + Mg \rightarrow [NaBH_2]^{2+} + MgO \qquad (6c)$$

$$[NaBH_2]^{2+} + 2H^- \rightarrow NaBH_4 + MgO \qquad (6d)$$

After that, for example, when scheduled reaction time elapses, product is cooled, hydrogen atmosphere is replaced, for example, by nitrogen, and then, reaction product is taken out for following extracting process. To give an example of extracting process, first, sodium borohydride and unreacted sodium metaborate are extracted typically by aqueous alkaline solution such as aqueous solution of caustic soda, and then sodium borohydride is recrystallized by recrystallization method to obtain crystal of sodium borohydride. Instead of recrystallization method, solvent extraction method, for example, with use of anhydrous ethylenediamine or liquid ammonia may be adapted.

According to method for producing of the present invention, reaction pressure of reaction conditions is fixed below reaction equilibrium pressure where magnesium hydride exists in stable or is stabled, and thereby protide is formed on surface of magnesium. The protide moves outwardly so as to exchange positions with the oxide ions of sodium metaborate which diffuse and move through the oxide layer, and enters in pores left by escaping oxide ions of the sodium metaborate to produce sodium borohydride. Therefore, it is not necessary to produce hydride of alkali earth metal as reaction precursor preliminarily, also reaction rate is restrained from lowering when surface of magnesium is covered with layer such as oxide layer or film, and as a result, sodium borohydride can be obtained with high yield. And, the inventors confirmed that yield of minimum 50% is achieved with reaction time one to three hours by chemical conversion of sodium metaborate, as is clear from examples described later.

Also, according to the above embodiment, as described previously, the oxide ions diffuse and move through the oxide layer as if to penetrate into alkali earth metal (the oxide layer) resulting in electrically unbalanced state. That moves protide, reacts the protide with borate, and eliminates or extremely decreases magnesium left unreacted. That is, as this allows magnesium to contribute to reaction with high utilization rate, operating cost can be eventually held down. Further, as reaction pressure (hydrogen pressure) is fixed low compared to conventional methods, less power is required for pressurizing, and thereby a pressurizer can be downsized. And, this provides an advantage in view of lowering cost in gross by that much.

In this embodiment, magnesium is used as alkali earth metal. However, also in case of using other alkali earth metal than described previously, it will be obvious that behaviors and effects of present invention are achieved by fixing a reaction pressure by hydrogen pressure below reaction equilibrium pressure where hydride of the alkali earth metal exists in stable or is stabled. And, it is preferred to grasp how equilibrium pressure line is like by conducting tests preliminarily as stated above. To take an example, in case of calcium, there is generally a linear relationship between reaction equilibrium pressure P (log P) and temperature T (1/T) where a reaction pressure is 0.03MPa at 1000°C and 0.1MPa at 1100°C.

Furthermore, according to the present invention, metals other than alkali earth metal such as zinc (Zn), iron (Fe) , silicon (Si) and aluminum (Al) may be used as far as to coexist with or include in alkali earth metal with ratio up to 50% of total amount of the metal. In this case, the metals other than alkali earth metal preferably are pulverized, for example, in average particle diameter of maximum $100\mu m$, specifically generally the same as the alkali earth metal and borate in average particle diameter. As these metals other than alkali earth metal have behaviors to hardly receive oxygen compared to alkali earth metal, they alone do not contribute to hydride of borate. However, by coexisting with the alkali earth metal, for example, such that zinc is mixed with magnesium at mol ratio 1 to 1, the metals enhance chemical potential of reaction system, act as oxygen receptor similarly to the alkali earth metal, and contribute to reaction to hydrogenate borate. That means, alkali earth metal to be filled in a reactor may be partly replaced with the metals of lower cost other than alkali earth metal and this results in an advantage of lowered operation cost.

In the present invention, hydrogenation catalyst or hydrogenating catalyst may be added to mixture of chemical raw material in order to further ensure high yield. The hydrogenation catalyst may be material, for example, metal which can adsorb and dissociate hydrogen. For example, metals such as nickel (Ni), Cobalt (Co), platinum (Pt), copper (Cu), palladium (Pd), ruthenium (Ru) and rhodium (Rh) may be adapted, and most preferably nickel is adapted. Amount of hydrogenation catalyst to be added may be maximum 30 weight % with respect to alkali earth metal, and typically may be 10 to 20 weight %. In such composition, as represented in reaction formula (7), hydrogen is chemically adsorbed to a surface of nickel and the hydrogen adsorbed reacts with magnesium to form protide as represented in reaction formula (8). The inventors confirmed that sodium borohydride can be obtained with yield of minimum 80% by using nickel as hydrogenation catalyst as is clear from examples described later.

$$2Ni\ (surface) + H_2 \Leftrightarrow 2Ni\bullet H\ (surface) \tag{7}$$

$$2Ni\bullet H\ (surface) + Mg\ (surface) \rightarrow 2Ni\ (surface) + Mg^{2+}\bullet 2H^-\ (surface) \tag{8}$$

Further, according to the present invention, hydrogen to be fed to a mixture of raw material is not limited to pure hydrogen. For example, hydrogen gas including carbon oxide such as carbon monoxide (CO) and carbon dioxide ($CO_2$), or hydrocarbon such as methane ($CH_4$) may be applied. To give concrete examples of such hydrogen gas, reformed natural gas, bio gas or coke oven gas is applied. Specifically, it is advantageous to use gas exhausted from coke oven which contains methane 30 volume % and carbon monoxide 6 volume % without any treatment, because heat thereof is available, and components of carbon monoxide and methane contained in the gas act as oxygen receptor with respect to oxide ions of borate to promote hydrogenation of alkali earth metal or magnesium. That is, use of coke oven gas has a merit to decrease formation of oxide layer on a surface of alkali metal or alkali earth metals as components of carbon monoxide and methane receive oxide ions of borate and generate carbon dioxide. And hydrogen or hydrogen gas is not limited to ones stated above, and may be, for example, hydrogen obtained in water electrolysis or brine electrolysis or the like with use of hydraulic power unit or the like.

More over, according to the present invention, borate as chemical raw material may be, for example, sodium metaborate which is separated after discharging hydrogen from tetrahydroborate, for example, such as sodium borohydride. Sodium metaborate is applied, for example, to reclaim sodium borohydride. To give a concrete example of such tetrahydroborate, tetrahydroborate used for fuel of fuel cells may be applied.

Following are descriptions on examples which serve to confirm effects of the present invention.

(EXAMPLE 1)

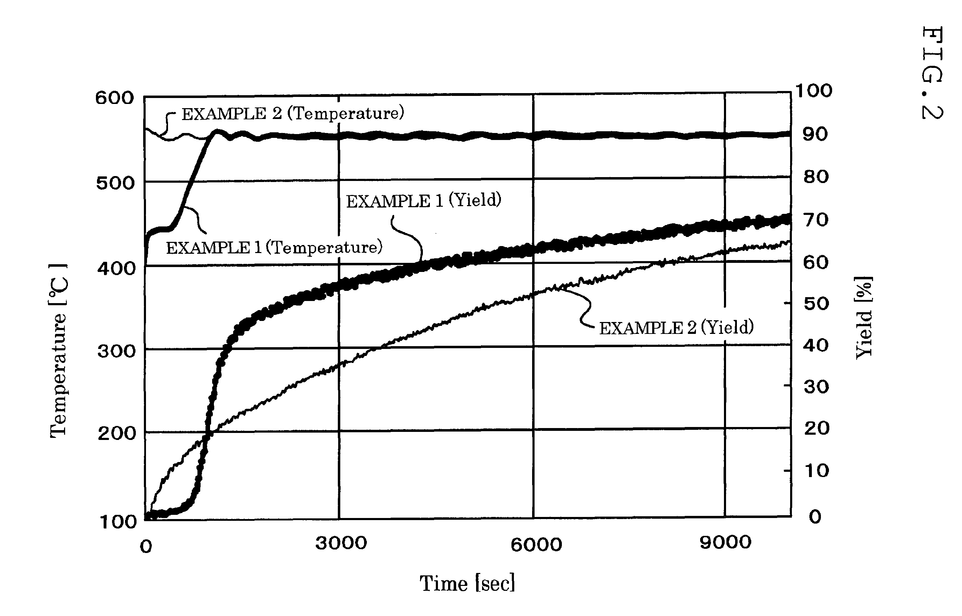

This example serves to confirm effects of the preferred embodiment stated above. 0.35g of powdery sodium metaborate of average particle diameter of 50μm and 0.51 g of powdery magnesium of average particle diameter of 100μm are fully mixed to a mixture and the mixture is filled in a reaction tube made of stainless steel. Then, after hydrogen gas is fed to the reaction tube at 400°C under hydrogen pressure 2.3MPa, temperature in the reaction tube or of hydrogen gas is raised to 550°C. The reaction quickly progresses when the temperature becomes over 500°C. With analysis by hydrogen generating method with hydrolysis or iodometric titration, yields are obtained during a period from start of reaction to three hours thereafter. The result is shown in Fig. 2. For example, 67% yield is shown 2 hours after start of reaction. Percent yield is obtained by actual mol amount produced of product/theoretical reaction mol amount x 100. Then, it is confirmed that sodium borohydride can be obtained with high yield.

(EXAMPLE 2)

EXAMPLE 2 is the same as EXAMPLE 1 in process except that hydrogen gas is fed to a reactor at temperature of 550°C under hydrogen pressure of 2.3Mpa and a mixture is reacted at this temperature. The result of EXAMPLE 2 is also shown in Fig. 2. For example, 56% yield is obtained 2 hours after start of reaction. That is, it is confirmed that sodium borohydride can be obtained with high yield also in EXAMPLE 2. Further, as seen compared to the result of EXAMPLE 1, high yield is more surely attained by initiating reaction while raising temperature.

(EXAMPLE 3)

EXAMPLE 3 is the same as EXAMPLE 1 in process except that nickel as hydrogenation catalyst is added to a mixture. 0.025g of powdery nickel of average particle diameter 5μm is mixed to the mixture. As a result, 87% yield is obtained. Hence, it is confirmed that high yield is achieved by adding hydrogenation catalyst.

(EXAMPLE 4)

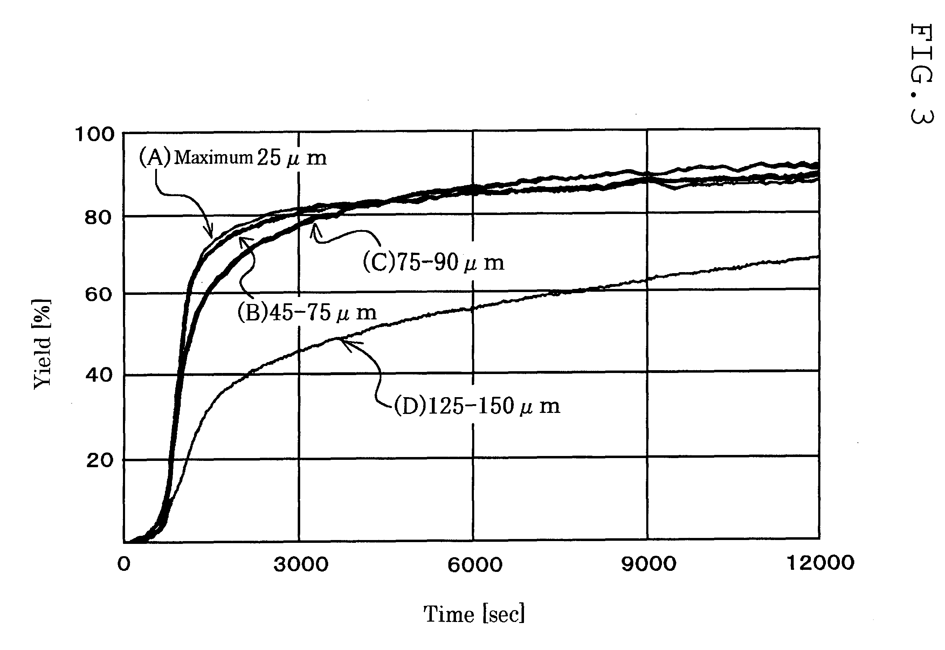

EXAMPLE 4 is the same as EXAMPLE 1 in process except that sodium metaborate as chemical raw material and magnesium are pulverized generally the same in average particle diameter of (A) maximum 25μm, (B) 45 to 75μm, (C) 75 to 90μm and (D) 125 to 150μm. In EXAMPLE 4, yields are observed during a period from start of reaction to 4 hours thereafter. The result is shown in Fig. 3. As is clear from the result of Fig. 3, in case that sodium metaborate and magnesium are pulverized generally the same in average particle diameter of (A), (B) and (C), yields can be extremely increased compared to those in average particle diameter of (D), by over 80%. That is, in order to improve yield, it is very important to use sodium metaborate as chemical raw material and magnesium which are pulverized generally the same in average particle diameter of maximum 100μm respectively or of which average particle diameters are generally the same, maximum 100μm respectively. Even in case of sodium metaborate and magnesium pulverized in average particle diameter of maximum 100μm respectively, if they are not pulverized generally the same in average particle diameter, for example, as in EXAMPLE 1, high yield is attained, but does not reach 80%. Hence, high yield is more surely attained by using sodium metaborate and magnesium which are pulverized generally the same in average particle diameter or of which average particle diameters are generally the same.

(COMPARATIVE EXAMPLE 1)

COMPARATIVE EXAMPLE 1 is the same as the examples in process except that a mixture is reacted at temperature of 400°C. That means reaction pressure (hydrogen pressure) is fixed to pressure where magnesium hydride can exist in stable or can be stabled. In other words, reaction pressure is fixed to reaction equilibrium pressure, 1.9MPa at 400°C. As a result, yield is as low as 4% in this COMPARATIVE EXAMPLE. That is, it is confirmed that high yield is obtained in case of under pressure condition below reaction equilibrium pressure where magnesium hydride exists in stable or is stabled. The reason for such high yield is assumed that as formation of magnesium hydride layer is not actively promoted due to low hydrogen pressure, a lot of magnesium contributes to reaction compared to the case of magnesium hydride layer built up thick, and thereby reaction progresses totally.

Powdery mixture containing borate and alkali earth metal, for example, magnesium is prepared. Hydrogen atmosphere is fed to the mixture, for example, from hydrogen gas source. The mixture is reacted in hydrogen atmosphere under pressure below reaction equilibrium pressure where hydride of magnesium can exist in stable.

**Claims**

1. A method for producing tetrahydroborates by using borates as chemical raw material, comprising:

   reacting a mixture containing borate and alkali earth metal by heating in a hydrogen atmosphere under pressure below a reaction equilibrium pressure where hydride of the alkali earth metal exists in stable.

2. The method for producing tetrahydroborates as set forth in claim 1 wherein the alkali earth metal is magnesium.

3. The method for producing tetrahydroborates as set forth in claim 1 or 2 wherein the mixture contains hydrogenating catalyst to adsorb hydrogen.

4. The method for producing tetrahydroborates as set forth in any one of claims 1 to 3 wherein the mixture is in form of fine powder.

5. The method for producing tetrahydroborates as set forth in claim 4 wherein the borate and the alkali earth metal respectively is pulverized of an average particle diameter of maximum 100μm.

6. The method for producing tetrahydroborates as set forth in claim 5 wherein the average particle diameters of both borate and alkali earth metal are generally the same.

7. The method for producing tetrahydroborates as set forth in any one of claims 1 to 6 wherein coke oven gas is used as a source of hydrogen.

8. The method for producing tetrahydroborates as set forth in any one of claims 1 to 7 wherein the mixture is provided with hydrogen atmosphere at temperature of maximum 450°C and heated to temperature of 500 to 650°C.

9. The method for producing tetrahydroborates as set forth in any one of claims 1 to 8 wherein the tetrahydroborate produced is or include any one of a group consisting of sodium borohydride ($NaBH_4$), lithium borohydride ($LiBH_4$) and potassium borohydride ($KBH_4$).

FIG.1

FIG.2

FIG.3